# EUROPEAN PATENT SPECIFICATION

(11) **EP 2 874 501 B1**
(45) Date of publication and mention of the grant of the patent: **20.07.2016**
(21) Application number: 13732153.5
(22) Date of filing: 27.06.2013
(51) Int. Cl.: A23D 9/02, C11B 3/00, C11B 3/06

(54) **REDUCTION OF MCPD-COMPOUNDS IN REFINED PLANT OIL FOR FOOD**
REDUKTION VON MCPD-VERBINDUNGEN IN RAFFINIERTEM PFLANZENÖL FÜR LEBENSMITTEL
RÉDUCTION DE COMPOSÉS DE MCPD DANS L'HUILE VÉGÉTALE RAFFINÉE POUR ALIMENTS

(30) Priority: 18.07.2012 WO PCT/DK2012/050271
(43) Date of publication of application: 27.05.2015
(73) Proprietor: AAK AB, 211 19 Malmö (SE)
(72) Inventor: HED, Krister, S-374 33 Karlshamn (SE); JOHANSSON, Martin, S-375 91 Mörrum (SE); MELLERUP, Jens, DK-8381 Tilst (DK)
(74) Representative: Patentgruppen
(86) International application number: PCT/EP2013/063506
(87) International publication number: WO 2014/012759

(56) References cited:
- EP-A2- 0 176 330
- EP-A2- 0 571 218
- WO-A1-2011/009841
- WO-A1-2012/065790

## Description

### FIELD OF THE INVENTION

The present invention relates to the field of edible triglyceride oils. In particular, the invention relates to a method for reducing the amount of 3-chloro-1,2-propanediol and related compounds in triglyceride oils.

### BACKGROUND OF THE INVENTION

It is known that 3-chloro-1,2-propanediol (3-MCPD) and 2-chloro-1,2-propanediol (2-MCPD) are formed in processed fats for foodstuff. Typically, these compounds are found as esters of fatty acids in triglyceride fats and oils at various concentrations, depending on the oil source, refining steps and other factors.

Also, glycidol and fatty acid esters thereof may be present in refined triglyceride fats and oils.

MCPD-compounds and glycidol-compounds are not desirable in foodstuff due to potential hazards related to their intake. Knowledge about the exact mechanisms of the formation of MCPD-compounds during the processing of edible oils is limited. There remains a need to reduce the concentrations of the mentioned compounds in triglyceride oils for foodstuff.

### SUMMARY OF THE INVENTION

The present invention pertains to a process for lowering the amount of esters of 2- and 3-MCPD in refined triglyceride oil, wherein said oil prior to entering the process has been treated with one or more refining steps and
wherein said oil comprises triglycerides of fatty acids having a carbon chain length of C12 - C24 in an amount of at least 50% of the total triglyceride content,
the process comprising the steps of :
- blending the oil with a base and
- heat treating the oil while passing steam through the oil at reduced pressure, keeping the degree of interesterification in the product from the process below 60%.

It has surprisingly been found that a lowering of the amount of MCPD-compounds in triglyceride oils comprising triglycerides of fatty acids having a carbon chain length of C12 - C24 in an amount of at least 50% of the total triglyceride content,
can be achieved by a treatment with aqueous base and a heat treatment at reduced pressure with steam- stripping and, at the same time, keeping the degree of interesterification below 60 % so that the triglyceride structure affecting the physical and/or nutritional properties of the native oil is not altered too much.

The degree of interesterification is defined herein as follows:
For a fat with considerable change in physical properties due to interesterification, such as palm oil, the degree of interesterification is most conveniently measured as the change in the solid fat content (SFC) of the product compared to the SFC of the starting oil (0% interesterification) and the SFC of a fully randomized (chemical interesterified with sodium methoxide) starting oil (100% interesterification). The degree of interesterification is defined as the percentage change SFC in a sample relative to the SFC in the starting oil and the fully randomized oil.

Solid fat content was measured at 10, 20, 30 and 35°C according to IUPAC 2.150(a), the degree of interesterification was calculated as the average result from the measurements at the 4 temperatures. When other oils like palm mid fraction or shea stearin is subject to the process, solid fat content should be measured by IUPAC 2.150 b due to the polymorphic nature of these fats, as other temperature may be relevant for other fats.

For liquid oil like sunflower oil the SFC is not suitable for determining the degree of interesterification. Instead the fatty acid composition in the sn-2 position of the triglyceride according to IUPAC 2.210 was used to calculate the degree of interesterification. The starting oil was defined as 0% interesterified. 100% interesterification was defined as to correspond to a sn-2 fatty acid composition being equal to the total fatty acid composition (measured with IUPAC 2.304).

It is quite surprising that the inventive process succeeds in efficiently lowering the amount of MCPD-compounds in a process comprising blending the oil with base at elevated temperatures without causing excessive interesterification, since base is known to catalyze interesterification in triglyceride oils.

Particularly for longer chain fatty acid triglycerides the degree of interesterification is to be kept below 60% according to the inventive process particularly to preserve the triglyceride structure of the original oil and thereby obtaining a somewhat predictable product from the process with respect to for example melting point.

In an embodiment of the invention the degree of interesterification in the oil is 50% or less or 40% or less, preferably 30% or less, more preferably 20% or less, most preferably 10% or less.

According to embodiments of the present invention, the degree of interesterification in the triglyceride oil is preferably kept as low as possible. In certain embodiments of the present invention, surprisingly low degrees of interesterification may be achieved.

In an embodiment of the invention the heat treatment is performed at a temperature between 120 °C and 240 °C, preferably between 175 °C and 235 °C most preferably between 200 °C and 225 °C. In further advantageous embodiments of the invention, the heat treatment is performed at temperatures such as 140 °C to 235 °C or 160 °C to 230 °C, in particular temperatures between 170 °C and 225 °C , 180 °C to 220 °C or 190 °C to 215 °C.

The heat treatment of the inventive process is preferably carried out at mild conditions, for example at temperatures not too high. By keeping the temperature comparatively low, a more selective process may be achieved, wherein the MCPD-esters in the oil are reacting with aqueous base at the position of the chlorine atom to a higher extent than reacting at the glyceride ester-bonds. The selection of the process temperature or range of temperatures depends on, for example, the oil composition and also the concentration of base and other factors.

In an embodiment of the invention the heat treatment has a duration of between 10 minutes and 4 hours, preferably between 20 minutes and 3 hours, more preferably between 30 minutes and 2 hours. In further advantageous embodiments of the invention, the duration of the heat treatment is between 25 minutes and 2.5 hours, for example between 40 minutes and 2.1 hours or 1 hour and 1.7 hours.

The time for running the heat treatment of the inventive process may vary, depending for example on the specific oil composition, including the concentration of MCPD-compounds in the oil.

In an embodiment of the invention the reduced pressure is between 1 and 100 mbar, preferably between 1.5 and 30 mbar, more preferably between 2 and 10 mbar.

The heat treatment of the inventive method is run at reduced pressure. One advantage of this is to avoid oxidative decomposition during the process - and another is that glycidol fatty acid esters formed by the heat treatment are evaporated. Yet another advantage is that it is also believed that some of the undesired MCPD-compounds and certain more volatile reaction products are more easily stripped of the blend, whereby a more effective process may be achieved. A complex relationship exists between the reduced pressure used in the process, partial pressures of different oil components, process time and other process variables.

In an embodiment of the invention the process further comprises the step of, subsequently to the heat treatment, removing the soap formed in the oil by adding base, by contacting the oil with neutral bleaching earth.

It has surprisingly been found that in order to maintain a low level of MCPD-compounds when removing the soap residues from the oil it is important to use neutral bleaching earth for this soap removal process.

If acids are used to remove the soap or if acid bleaching earth is used, MCPD-compounds may be formed either during the bleaching process or during a following deodorization, and the effect of the inventive process may be diminished in that amount of MCPD-compounds in the oil may be going up contrary to the intention of using the inventive process. However, the added base may neutralize a small addition of acid bleaching earth thus creating neutralized bleaching earth in situ.

In an embodiment of the invention the bleaching earth is selected from the group consisting of bleaching clays based on mineral and bleaching earth with a pH in hydrous suspension between 4 and 9.

In a subsequent bleaching process using bleaching clays, the pH of the used clays in hydrous suspension may preferably be within a pH range comparatively close to neutral. For example preferred ranges for the pH include a pH from 5 -8.5 such as 6-8.

In an embodiment of the invention the clays based on mineral are selected from the group consisting of bentonit, fuller earth and sepiolite.

A wide range of mineral clays and other commercial bleaching products may be used for subsequent removal of soap residues and other impurities like glycidyl esters as long as they are not too acidic or used in combination with acids.

In an embodiment of the invention the concentration of glycidyl esters in the triglyceride oil is reduced by at least 80%, preferably at least 90% when compared to the concentration of glycidyl esters in the triglyceride oil after the heat treatment, by contacting the oil with neutral bleaching earth or by contacting the oil with neutral bleaching earth followed by a deodorization.

Glycidyl esters are, alongside with MCPD-compounds, not desirable in edible oils. The inventive process, in preferred embodiments, may help diminishing the amount of glycidyl esters. Further, already the alkali heat treatment lowers the glycidyl ester content if the content in the starting oil is high, which is the case if starting with an oil that has been refined at a high temperature such as a physical refined RBD palm oil. In a physically refined RBD palm oil, the glycidyl ester content is often high and an alkali heat treatment as described herein decreases not only the MCPD but also glycidol compounds.

Analysis of glycidyl-esters may be performed by different methods. As used herein, "glycidol" refers to sum of glycidol and their respective esters reported as equivalents of their free form. This may be done e.g. with methods using a alkaline ester cleavage followed by e.g.. GC-MS detection of glycidol after derivatization. The values given are then a sum of glycidol and their respective esters as equivalents of their free form. One method is DGF C-VI 18 (10) where glycidyl esters are analyzed and reported as equivalents of glycidol. Another method is SGS "3-in-1" (Kuhlmann, Eur. J. Lipid Sci. Technol. 2011, 113, 335-344).

Similarly, analysis for 2-MCPD-esters, 3-MCPD-esters may be performed using "3-in-1" method which employs mild alkaline ester cleavage followed by GC-MS detection of 3-MCPD, 2-MCPD (and glycidol, supra). The values given are then a sum of each of 3-MCPD, 2-MCPD as well as glycidol and their respective esters reported as equivalents of their free form.

In an embodiment of the invention the one or more refining steps before the heat treatment are selected from the group consisting of
de-gumming, washing, drying, neutralizing, bleaching, carbon treatment, filtering, distillation and deodorisation.

The MCPD-compounds to be reduced in the triglyceride oil according to the inventive process are believed to be formed in the oil from components present in the oil during the refining process.

As such, the present process is particularly relevant for refined oils.

In an embodiment of the invention, free fatty acids are added to the oil.

The addition of free fatty acids to the oil may result in some benefits, for example by suppressing the degree of interesterification.

In an embodiment of the invention free fatty acids are added to the oil prior to and/or during heat treatment.

The addition of free fatty acids to the oil prior to and/or during the heat treatment in some embodiments of the invention may result in some benefits, for example by suppressing the degree of interesterification.

In embodiments of the invention, where very low degrees of transesterification are desired, free fatty acids may be added to the reaction mixture. Particularly longer chain, i.e. ≥ C20, free fatty acids such as behenic or erucic fatty acids are beneficial due to their lower rate of evaporation. Since the longer chain fatty acids have a lower rate of evaporation, a lower amount of free fatty acids may be added and still get a low degree of interesterification which is also beneficial. Examples of free fatty acids with ≥ C20 are arachidic, behenic, lignoceric, gondoic, erucic, nervonic, arachidonic, eicosapentaenoic acid (EPA) and docosahexaenoic acid (DHA).

In an embodiment of the invention the free fatty acid are added in an amount of 0.1-3%, such as 0.1, 0.2, 0.3, 0.4, 0.5, 0.6, 0.7, 0.8, 0.9, 1, 1.5, 2, 2.5 or even 3%, by weight of the amount of oil before and/or during the heat treatment. Said free fatty acids may be added in a continuous way, during the process starting at time point 0, i.e. before the process starts, and then continuously during the heat treatment to keep the free fatty acid levels about constant at levels exemplified above, i.e. in an amount of 0.1-3%. Said fee fatty acids may also be added in a continuous way starting anytime during the heat treatment process. Said free fatty acids may further be added in a repeated way before and during the process starting at time point 0, which is before heat treatment, as well as repeatedly during heat treatment such as every 5, 10, 15, 20, 25, 30, 35, 40, 45, 50, 55, or even every 60 minute in a fixed amount, such as listed herein (supra and in Examples). When adding the free fatty acids repeatedly, they may as well be added repeatedly starting anytime during the heat treatment process. Said free fatty acids may further be added continuously or repeatedly before and/or during the heat treatment in fixed or in non-fixed amounts to allow for a high degree of flexibility of free fatty acid levels during the heat treatment.

In an embodiment of the invention glycerol is added to the oil prior to heat treatment. Experiments have shown that the addition of glycerol to the reaction mixture of triglyceride oil and aqueous base may decrease the needed concentration of base and thereby suppress the measured degree of interesterification while the reduction in the amount of MCPD-compounds is not significantly affected.

In embodiments of the invention, where very low degrees of transesterification are desired, glycerol may be added to the reaction mixture.

In an embodiment of the invention the glycerol is added in an amount of 0.1 to 1% by weight of the amount of oil.

In an embodiment of the invention the oil comprises triglycerides of fatty acids having a carbon chain length of C12 - C24 in an amount of at least 60% of the total triglyceride content, preferably at least 75%, more preferably at least 85% of the total triglyceride content.

In preferred embodiments of the present invention the triglyceride oil comprises large amounts of long-chained fatty acid esters. For these oils it may be particularly important to control the degree of interesterification taking place to a certain extend when applying the inventive process.

Excessive interesterification may lead to less valuable oils due to alteration of the physical and/or nutritional properties of the original oil.

Therefore, the inventive process is particularly useful when treating triglyceride oils comprising large amounts of long chain fatty acid esters, when preservation of a particular triglyceride composition is desirable.

In an embodiment of the invention the triglyceride oil is obtained from palm oil, sunflower oil, rape seed oil, soy bean oil, corn oil, coconut oil, palm kernel oil, shea kernel oil, structured triglycerides manufactured by positional specific lipases, their fractions and combinations thereof.

A number of natural triglyceride oils have a composition suitable for use in the presently disclosed process.

In an embodiment of the invention the base is selected from the group consisting of NaOH, KOH, and other hydroxides of alkali metals or alkaline earth metals. According to embodiments of the present invention hydroxides are preferred as bases. Other bases may be used.

In an embodiment of the invention the base is provided as an aqueous solution, a solid, saponified fatty acids, saponified triglyceride oil or any combination thereof. In order to achieve the desired results, small amounts of water may be needed to assist in the base-catalyzed reactions taking place in the triglyceride oil. Most oils comprise small amounts of water and the base may be added as a solid and still efficiently act as a hydrous base when contacting the water in the oil. Water is also present in the form of steam which is passed through the oil. Nevertheless, it may be convenient to add the base as an aqueous solution in some embodiments.

In an embodiment of the invention the concentration of base blended into the oil corresponds to 2 ppm - 30 ppm hydroxide ion, preferably between 3 ppm and 20 ppm hydroxide ion more preferably between 4 ppm to 15 ppm hydroxide ion, most preferably between 5 ppm to 12 ppm hydroxide ion..

In preferred embodiments of the present invention, the base concentration is kept within certain limits, for example between 6 ppm and 10 ppm hydroxide ion. This may help in controlling the degree of interesterification while still effectively aid in the removal of MCPD-compounds.

In an embodiment of the invention the concentration of esters of 2- and 3-MCPD in refined triglyceride oil is reduced by at least 50%, preferably 60 % more preferably 70%, most preferably at least 80% relative to the initial concentration.

In preferred embodiments of the present invention, at least half of the MCPD-compounds are removed from the oil.

To meet demand for oil with low MCPD-concentrations, for example for applications involving baby food, it may be necessary to substantially reduce the amount of MCPD-compounds in the oil. According to preferred embodiments of the present invention, such substantial reductions may be achieved. It has to be kept in mind, however, that even less drastic reductions of the concentration of MCPD-compounds in the oil may be useful.

In an embodiment of the invention the triglyceride oil has a native triglyceride structure. In preferred embodiments of the present invention, the triglyceride oil treated according to embodiments of the invention has a native or non-randomized triglyceride structure. For example, the oil may have been subjected to a fractionation process, but not otherwise significantly altered with respect to triglyceride structure.

In order to preserve both nutritional and physical properties of native oil, it may be highly desirable to avoid alteration of the non-randomized triglyceride structure prior to heat treating with base.

The present invention also pertains to a triglyceride oil treated according to the process of claim 1.

The present invention further pertains to the use of triglyceride oil treated according to the process of claim 1 in food applications.

### DETAILED DESCRIPTION

The process of the present invention is reducing the amount or MCPD-compounds in refined triglyceride oils without randomizing the triglyceride structure of the oil to a too high extent. This is particularly important if the physical and nutritional properties of the natural oil feedstock are to be retained.

The heat treatment of the refined triglyceride oil with aqueous base somewhat selectively reduces the amount of MCPD-compounds without leading to complete interesterification of the oil. It is believed that base catalyzed reactions at the chlorine atom in MCPD-compounds, whereby the net reaction is that chloride may be exchanged with hydroxide, removes the halogen in a volatile form due to the simultaneous stripping with steam at reduced pressure. The exact reactions and mechanisms involved are not entirely clear.

The process parameters may advantageously be chosen to optimize both the lowering of MCPD-compound concentration in the oil and the desired suppression of interesterification processes in the oil.

Important parameters are for example the concentration of base, the process temperature, the pressure during heat treatment, process time, the content of free fatty acids in the triglyceride oil and the content of glycerol and free OH-groups in mono- and diglycerides. Many of these parameters may be interrelated in a more or less complicated manner.

The concentration of base is important for the desired removal of MCPD-compounds and the undesired interesterification since both are catalysed by base.

It is advantageous to keep the concentration of base comparatively low in order to avoid extensive interesterification of the triglyceride oil. Interesterification may lead to oil with for example melting properties considerably different from the original oil or with lower bioavailability of essential fatty acids. To preserve the original triglyceride composition as much as possible it may be advantageous to keep the concentration of base comparatively low. On the other hand, if base concentration is too low, the process of removing MCPD-compounds may become inefficient. The choice of concentration of base is thus based on a trade-off between desired and undesired reactions, and, for example, the choice of process temperature. If a particular degree of interesterification is chosen as the tolerable maximum, lowering the base concentration may allow for a higher process temperature.

Process temperature during the heat treatment of the refined triglyceride oil with base again affects both the efficiency with which MCPD-compounds are removed and the degree of interesterification. Other parameters being the same, the higher the temperature, the more interesterification may take place. Experiments show that for other parameters fixed, there may exist an optimum temperature in relation to lowering the concentration of MCPD-compounds in the oil. Again, a trade-off has to be made to avoid too much interesterification.

The pressure during the heat treatment also influences both the degree of interesterification and removal of MCPD-compounds, for example by controlling the content of free fatty acids which is believed to decrease rate of the interesterification process or by increasing the evaporation of undesired substances.

Process time or the time used for the heat treatment also influences both the degree of interesterification and removal of MCPD-compounds. Depending on what is most important and other parameters fixed, the process time may be chosen to be relatively short, for example 45 minutes, to remove a large part of the MCPD-compounds and still keeping degree of interesterification at a lower level, or a longer process time, for example 80 minutes, may be chosen to remove even more MCPD-compounds, but at the expense of a higher degree of interesterification.

The concentration of free fatty acids (FFA) in the triglyceride oil during the heat treatment with base also affects the degree of interesterification. It may be advantageous to add FFA to the oil-base mixture. This may be done before and/or during heat treatment as described herein or to adjust the previous refining process to have a higher than normal content of free fatty acids, because experiments have shown that interesterification may be suppressed to a certain extend without significantly affecting the efficiency of the lowering of MCPD-compound concentrations. Actually experiments indicate that the removal of glycidyl-compounds may also be more efficient when the FFA-concentration in the triglyceride oil entering the heat treatment with base is comparatively high.

Similar effects may also be seen if glycerol is added the triglyceride oil prior to heat treatment with base: Decrease of base addition but still good efficiency of lowering the MCPD-compound concentrations may be obtained.

In an advantageous embodiment of the present invention, the heat treated triglyceride oil is subsequently treated with neutral bleaching earth to remove small amounts of soap that have been formed during the treatment with base. It has been found that alternative methods for soap removal, such as the addition of acids, may actually result in the formation of MCPD-compounds, thereby counteracting the main purpose of the inventive process. A bleaching process with neutral bleaching earth may also effectively reduce the amount of glycidyl esters in the oil. Acidic bleaching earth or bleaching earth activated with acid may also remove glycidyl esters but may tend to aid in the formation of MCPD-compounds if used in higher amounts than what the added base is able to neutralise.

Use of neutral bleaching earth has been found to preserve the low concentrations of MCPD-compounds and at the same time effectively removing soap residues and glycidyl esters.

It is generally important that further processing of the oil after the inventive alkaline heat treatment does not elevate the amount of MCPD-compounds in the triglyceride oil significantly.

### EXAMPLES

### EXAMPLE 1: Heat treatment of oil

600 g of refined palm oil olein with an iodine value of 56 (RBD POO IV56) was mixed with 0.11 ml 4M aqueous NaOH, corresponding to 13 ppm OH⁻. The blend was heated to 215 °C for 2 hours in a glass laboratory deodorizer at a reduced pressure of about 2 mbar. About 2 weight % steam was used as stirring and stripping agent.

**TABLE 1: Effect of heat treatment with aqueous base and steam at 215 °C and 2 mbar on selected oil constituents**

| | Before heat treatment | After heat treatment |
|---|---|---|
| [3-MCPD] | 3.3 ppm | 0.7 ppm |
| [2-MCPD] | 1.6 ppm | 0.4 ppm |
| Degree of interesterification | - | 45% |
| Glycidol | 8.4 ppm | 5.3 ppm |

As can be seen from Table 1, the concentration of MCPD-compounds in the oil is reduced by about 78% from a total of 4.9 ppm to a total of 1.1 ppm.

It is also evident from Table 1 that the concentration of glycidol compounds is reduced after the heat treatment.

In this experiment, considerable interesterification occurred (45%).

Analysis for 2-MCPD-esters, 3-MCPD-esters and glycidyl-esters was performed by the external contract laboratory of SGS, Hamburg, Germany using their "3-in-1" method which employs mild alkaline ester cleavage followed by GC-MS detection of 3-MCPD, 2-MCPD and glycidol. The values given are a sum of each of 3-MCPD, 2-MCPD and glycidol and their respective esters reported as equivalents of their free form.

The degree of interesterification was assessed by comparing the solid fat content (SFC) of the product with the SFC the starting oil (0% interesterification) and the SFC of a fully randomized (chemical interesterified with sodium methoxide) starting oil (100% interesterification). Solid fat content was measured at 10, 20, 30 and 35°C according to IUPAC 2.150(a), the degree on interesterification is calculated as the average result of the 4 temperatures. Given the measurement accuracy of SFC measurement the estimated error of the degree of interesterification is approximately 5 to 10 units.

### EXAMPLE 2: Effect of pressure

The experiment from Example 1 was repeated, but the pressure was reduced to about 10 mbar and 30 mbar instead of 2 mbar.

**TABLE 2: Effect of heat treatment with aqueous base and steam at 215 °C and 10 mbar / 30 mbar on selected oil constituents.**

| | Before heat treatment | After heat treatment | |
|---|---|---|---|
| Pressure | | 10 mbar | 30 mbar |
| [3-MCPD] | 3.3 ppm | 1.2 ppm | 1.3 pm |
| [2-MCPD] | 1.6 ppm | 0.7 ppm | 0.8 ppm |
| Degree of interesterification | - | <5% | <5% |
| Glycidol | 8.4 ppm | 5.9 ppm | 5.8 ppm |

The results in Table 2 show that the concentration of MCPD-compounds is still effectively diminished by over 60% while the degree of interesterification is drastically reduced when compared to Example 1 to less than 5 %.

The concentration of glycidol compounds is slightly higher than after treatment at 2 mbar (see Table 1).

### EXAMPLE 3: Effect of temperature

Another RBD palm olein IV 56 was treated as the oil in Example 1 with 0.123 ml 4M aqueous NaOH, corresponding to 14 ppm OH⁻, at different temperatures for 2 hours.

**TABLE 3: Effect of temperature during heat treatment with aqueous base on selected oil constituents.**

| | Before heat treatment | After heat treatment | | |
|---|---|---|---|---|
| Temperature | | 200°C | 225°C | 245°C |
| [3-MCPD] | 3.7 ppm | 0.7 ppm | 0.6 ppm | 1.5 ppm |
| [2-MCPD] | | | | |
| Degree of interesterification | interesterification - | 10% | 55% | 90% |
| Glycidol | 7.7 ppm | 3.4 ppm | 5.3 ppm | 19 ppm |

In this case the content of 3- MCPD- and glycidyl esters was analyzed according to DGF C-VI 18 and reported as equivalents of free 3-MCPD and glycidol respectively.

The results in Table 3 show that at higher temperatures interesterification takes place to a higher degree and at temperature above 225°C the reduction of 3-MCPD becomes less effective. It can also be seen from Table 3 that the concentration of glycidol-compounds increases at higher temperatures.

### EXAMPLE 4: Effect of high FFA content in the starting material

Example 1 was repeated with the same oil and the same addition of NaOH, but at the same time the oil was added 1% free fatty acids (oleic acid).

**TABLE 4: Effect of adding FFA before heat treatment on selected oil constituents.**

| | Before heat treatment | After heat treatment |
|---|---|---|
| [3-MCPD] | 3.3 ppm | 0.6 ppm |
| [2-MCPD] | 1.6 ppm | 0.4 ppm |
| FFA* | 1.1% | 0.03% |
| Degree of interesterification | - | 5% |
| Glycidol | 8.4 ppm | 1.5 ppm |

| | | |
|---|---|---|
| *Reported as oleic acid (molar mass of 282 g/mol) | | |

Analysis for FFA was performed using IUPAC 2.201. It can be seen from Table 4 that the degree of interesterification is less that in Example 1 and, at the same time, the content of glycidol compounds is reduced more than in Example 1.

### EXAMPLE 5: Effect of glycerol added

Example 1 was repeated with the same oil and a lower content of NaOH (0.055 ml 4M aqueous solution, corresponding to 7ppm OH⁻), but at the same time the oil was added 0.3% glycerol to increase reaction speed with the lower level of alkali catalyst.

**TABLE 5: Effect of adding glycerol before heat treatment on selected oil constituents.**

| | Before heat treatment | After heat treatment |
|---|---|---|
| [3-MCPD] | 3.3 ppm | 0.5 ppm |
| [2-MCPD] | 1.6 ppm | 0.4 ppm |
| Degree of interesterification | - | 20% |
| Glycidol | 8.4 ppm | 3.3 ppm |

It can be seen from Table 5 that, when compared to Example 1, the addition of glycerol and the lower base concentration reduces the degree of interesterification, while the content of MCPD compounds are still reduced significantly.

### EXAMPLE 6: Effect of treating time

Example 1 was repeated with the same oil and the same addition of NaOH, but with different processing time.

**TABLE 6: Effect of treating time on selected oil constituents.**

| | Before heat treatment | After heat treatment | | |
|---|---|---|---|---|
| Time | | 30 min | 60 min | 120 min |
| [3-MCPD] | 3.3 ppm | 1.1 ppm | 0.9 ppm | 0.7 ppm |
| [2-MCPD] | 1.6 ppm | 1.0 ppm | 0.7 ppm | 0.4 ppm |
| Degree of interesterification | - | 5% | 20% | 45% |
| Glycidol | 8.4 ppm | 2.8 ppm | 4.6 ppm | 5.3ppm |

It can be seen from Table 6, that with an increase of treating time, a better reduction of MCDP-compounds is achieved, while the degree of interesterification goes up with treating time and the reduction of glycidol compounds is less for longer treating times. The entry in Table 6 for 120 minutes is taken from Table 1 for easy comparison.

### EXAMPLE 7: Effect of alkali content

The experiment from Example 3 was repeated with a lower content of alkali, only 0.075 ml of a 4M aqueous solution of NaOH was added, corresponding to 9 ppm OH⁻, at different temperatures.

**TABLE 7: Effect of base-concentration on selected oil constituents.**

| | Before heat treatment | After heat treatment | | |
|---|---|---|---|---|
| Temperature | | 175°C | 200°C | 240°C |
| [3-MCPD] | 3.7 ppm | 1.8 ppm | 0.8 ppm | 1.1 ppm |
| [2-MCPD] | | | | |
| Degree of interesterification | - | 10% | 5% | 55% |
| Glycidol | 7.7 ppm | 4.0 ppm | 2.2 ppm | 5.1 ppm |

When comparing to example 3 this shows that when the addition of alkali is reduced a higher temperature may be applied. And even at 175°C and this low content of alkali the content of 3-MCPD is reduced by 50% and the degree of interesterification is negligible.

### EXAMPLE 8: Effect of higher base concentration at different temperatures

The experiment from Example 1 was repeated at different temperatures using a higher addition of alkali, 0.246 ml of a 4 M aqueous solution of NaOH, corresponding to 28 ppm OH⁻, was added.

**TABLE 8: Effect of base concentration and temperature on selected oil constituents.**

| | Before heat treatment | After heat treatment | |
|---|---|---|---|
| Temperature | | 210°C | 235°C |
| [3-MCPD] | 3.3 ppm | 0.5 ppm | 1.2 pm |
| [2-MCPD] | 1.6 ppm | 0.5 ppm | 0.5 ppm |
| Degree of interesterification | - | 30% | 100% |
| Glycidol | 8.4 ppm | 7.3 ppm | 18 ppm |

The results in Table 8 show, when compared to Example 1 that higher concentrations of base lead to more interesterification and less glycidyl ester reduction. At higher temperatures, the amount of glycidol compounds is significantly increased.

### EXAMPLE 9: Effect of further processing - bleaching and deodorising

The experiment from Example 1 was repeated at 210°C for 120 minutes with 0.074 ml of a 4M aqueous solution of NaOH added, corresponding to 9 ppm OH⁻.

After the heat treatment the oil was bleached at 90 °C for 30 minutes at a pressure of 30-40 mbar using 0.5 % Tonsil Supreme 118 FF neutralised bleaching earth, pH in water suspension 6 - 8. The oil was subsequently deodorized at 210 °C using 2% stripping stream and a pressure of 2 mbar during 120 minutes.

**TABLE 9: Effect of bleaching and deodorization after alkaline heat treatment with aqueous base and steam at 210 °C and 2 mbar on selected oil constituents.**

| | After heat treatmet | After bleaching | After deodorization |
|---|---|---|---|
| [3-MCPD] | 0.6 ppm | 0.6 ppm | 0.8 ppm |
| [2-MCPD] | 0.5 ppm | 0.5 ppm | 0.4 ppm |
| Degree of interesterification | 20% | not analyzed | 20% |
| Glycidol | 3.7 | 2.7 ppm | 0,2 ppm |

The results in Table 9 indicate that neither bleaching nor deodorization under the specified conditions increases the content of MCPD compounds significantly.

### EXAMPLE 10: Heat treatment of refined sunflower oil

The experiment of Example 1 was repeated with refined sunflower oil which was mixed with 0.1 ml 4 M aqueous KOH, corresponding to 11 ppm OH⁻. The blend was heated to 215 °C for 120 minutes in a glass laboratory deodorizer at a reduced pressure of about 2 mbar. About 2 weight % steam was used as stirring and stripping agent.

**TABLE 10: Effect of heat treatment with aqueous base and steam at 215 °C and 2 mbar on selected oil constituents.**

| | Before heat treatment | After heat treatment |
|---|---|---|
| [3-MCPD] | 0.83 ppm | 0.12 ppm |
| [2-MCPD] | 0.39 ppm | 0.10 ppm |
| Degree of interesterification | - | 20% |
| Glycidol | 0.10 ppm | 3.6 ppm |

For liquid oil like sunflower oil the SFC is not suitable for determining the degree of interesterification. Instead the fatty acid composition in the sn-2 position of the triglyceride according to IUPAC 2.210 was used to calculate the degree of interesterification. The starting oil was defined as 0% interesterified. 100% interesterification was defined as to correspond to a sn-2 fatty acid composition being equal to the total fatty acid composition (measured with IUPAC 2.304). For sunflower oil oleic and linoleic acid are the major fatty acids (>10%) and an average of their degree of interesterification was used as the degree of interesterification of the sample.

The results given in Table 10 show an overall MCPD-compound reduction of almost 82%.

### EXAMPLE 11: Bleaching and deodorization of heat treated refined sunflower oil

The heat treated oil of Example 10 was bleached at 90°C for 30 minutes at a pressure of 30-40 mbar using 1.0 % Tonsil Supreme 118 FF neutralised bleaching earth, pH in water suspension 6 - 8. 600g of the oil was subsequently deodorized at 215° using 2% stripping stream and a pressure of 2 mbar during 120 minutes.

**TABLE 11: Effect of bleaching and deodorization after alkaline heat treatment with aqueous base and steam at 215 °C and 2 mbar on selected oil constituents**

| | After bleaching | After deodorization |
|---|---|---|
| [3-MCPD] | 0.11 ppm | 0.18 ppm |
| [2-MCPD] | 0.10. ppm | <0.10 ppm |
| Degree of interesterification | Not analysed | 20% |
| Glycidol | 0.21 ppm | <0.10 ppm |

The results in Table 11 indicate that neither bleaching nor deodorization under the specified conditions increases the content of MCPD compounds significantly

### EXAMPLE 12: Other means of refining the heat treated oil

The oil treated at 225°C from Example 3 was further refined by bleaching with an acid activate bleaching earth (1 % Tonsil Optimum 215 FF, pH in a water suspension 2.3 - 3.5) and added citric acid. The same oil was bleached according to an alternative process with a neutralized bleaching earth (1 % Tonsil Supreme 118 FF, pH in a water suspension 6-8) without the addition of citric acid.

**TABLE 12: Effect of bleaching with different bleaching earth after heat treatment.**

| | After heat treatment | After bleaching with acid bleaching earth. | After bleaching with neutralised bleaching earth. |
|---|---|---|---|
| [3-MCPD] | 0.6 ppm | 2.2 ppm | 0.5 ppm |
| [2-MCPD] | | | |
| Glycidol | 5.3 ppm | 0.1 ppm | 0,2 ppm |

Table 12 shows that after a bleaching process with acid activated bleaching earth and citric acid a major part of the 3-MCPD is recovered, whereas the low content of 3-MCPD is maintained when using a neutral bleaching earth and no acid treatment.

### EXAMPLE 13: Effect of adding FFA during heat treatment

Example 4 was repeated with another batch of RBD palm olein IV 56 and treated at 235°C with repeated additions of 1.0 % free fatty acids (oleic) by weight of the original amount of RBD palm olein IV 56 oil every 24 minutes (in total five additions: 0, 24, 48, 72 and 96)

**TABLE 13: Effect of adding longer chain FFA during heat treatment on selected oil constituents.**

| | Before heat treatment | After heat treatment |
|---|---|---|
| [3-MCPD] | 4.9 ppm | 0.4 ppm |
| [2-MCPD] | 2.2 ppm | 0.3 ppm |
| FFA* | 1.0% | 0.04% |
| Degree of interesterification | - | 15% |
| Glycidol | 8.5 ppm | 1.8 ppm |

| | | |
|---|---|---|
| *Reported as oleic acid (molar mass of 282 g/mol) | | |

It can be seen from Table 13 that addition of free fatty acids (here oleic) during the heat treatment is a way to avoid FFA depletion and maintain a low degree of interesterification even at a higher temperature while still having significant MCPD reduction.

### EXAMPLE 14: Effect of adding longer chain FFA

Example 4 was repeated with RBD palm olein IV 56 and another source of free fatty acids, namely 0.3% by weight of the original amount of RBD palm olein IV 56 oil of behenic acid.

**TABLE 14: Effect of adding longer chain FFA during heat treatment on selected oil constituents.**

| | Before heat treatment | After heat treatment |
|---|---|---|
| [3-MCPD] | 3.9 ppm | 0.9 ppm |
| [2-MCPD] | 2.4 ppm | 0.7 ppm |
| FFA* | 0.35% | 0.05% |
| Degree of interesterification | - | 5% |
| Glycidol | 9.6 ppm | 1.17 ppm |

| | | |
|---|---|---|
| *Reported as behenic acid (molar mass of 341 g/mol) | | |

It can be seen from Table 14 that results are similar to Example 4 even though much less, however longer, fatty acid is added.

## Claims

1. Process for lowering the amount of esters of 2- and 3-MCPD in refined triglyceride oil, wherein said oil prior to entering the process has been treated with one or more refining steps and
wherein said oil comprises triglycerides of fatty acids having a carbon chain length of C12 - C24 in an amount of at least 50% of the total triglyceride content,
the process comprising the steps of :
- blending the oil with a base and
- heat treating the oil while passing steam through the oil at reduced pressure, keeping the degree of interesterification in the product from the process below 60%.

2. Process according to claim 1,
wherein the degree of interesterification in the oil is 50% or less or 40% or less, preferably 30% or less, more preferably 20% or less, most preferably 10% or less.

3. Process according to claims 1 and 2,
wherein the heat treatment is performed at a temperature between 120 °C and 240 °C, preferably between 175 °C and 235 °C most preferably between 200 °C and 225 °C.

4. Process according to any of the claims 1-3,
wherein the heat treatment has a duration of between 10 minutes and 4 hours, preferably between 20 minutes and 3 hours, more preferably between 30 minutes and 2 hours.

5. Process according to any of the claims 1-4,
wherein the reduced pressure is between 1 and 100 mbar, preferably between 1.5 and 30 mbar, more preferably between 2 and 10 mbar.

6. Process according to any of the claims 1-5,
wherein the process further comprises the step of, subsequently to the heat treatment, contacting the oil with neutral bleaching earth.

7. Process according to claim 6,
wherein the bleaching earth is selected from the group consisting of bleaching clays based on minerals and bleaching earth with a pH in hydrous suspension between 4 and 9, preferably between 6 - 8.

8. Process according to claim 7,
wherein the clays based on minerals are selected from the group consisting of bentonit, fuller earth and sepiolite.

9. Process according to any of the claims 6 to 8,
wherein the concentration of glycidyl esters in the triglyceride oil is reduced by at least 80%, preferably at least 90% when compared to the concentration of glycidyl esters in the triglyceride oil after the heat treatment, by contacting the oil with neutral bleaching earth, or by contacting the oil with neutral bleaching earth followed by a deodorization.

10. Process according to any of the claims 1-9,
wherein the one or more refining steps before the heat treatment are selected from the group consisting of
de-gumming, washing, drying, neutralizing, bleaching, carbon treatment, filtering, distillation and deodorisation..

11. Process according to any of the claims 1-10,
wherein free fatty acids are added to the oil.

12. Process according to any of the claims 1 - 11,
wherein free fatty acids are added to the oil prior to and/or during heat treatment.

13. Process according to claims 11 or 12,
wherein the free fatty acids are added in an amount of 0.1 - 3% by weight of the amount of oil.

14. Process according to any of the claims 1-13,
wherein glycerol is added to the oil prior to heat treatment.

15. Process according to claim 14,
wherein the glycerol is added in an amount of 0.1 to 1% by weight of the amount of oil.

16. Process according to any of the claims 1-15,
wherein the oil comprises triglycerides of fatty acids having a carbon chain length of C12 - C24 in an amount of at least 60% of the total triglyceride content, preferably at least 75%, more preferably at least 85% of the total triglyceride content.

17. Process according to any of the claims 1-16,
wherein the triglyceride oil is obtained from palm oil, sunflower oil, rape seed oil, soy bean oil, corn oil, coconut oil, palm kernel oil, shea kernel oil, structured triglycerides manufactured by positional specific lipases, their fractions and combinations thereof.

18. Process according to any of the claims 1-17,
wherein the base is selected from the group consisting of NaOH, KOH, other hydroxides of alkali metals or alkaline earth metals.

19. Process according to any of the claims 1-18,
wherein the base is provided as an aqueous solution, a solid, saponified fatty acids, saponified triglyceride oil or any combination thereof.

20. Process according to any of the claims 1-19,
wherein the concentration of base blended into the oil corresponds to 2 ppm - 30 ppm hydroxide ion, preferably between 3 ppm and 20 ppm hydroxide ion, more preferably between 4 ppm and 15 ppm hydroxide ion , most preferably between 5 ppm and 12 ppm hydroxide ion.

21. Process according to any of the claims 1-20,
wherein the concentration of esters of 2- and 3-MCPD in refined triglyceride oil is reduced by at least 50%, preferably 60 % more preferably 70%, most preferably at least 80% relative to the initial concentration.

22. Process according to any of the claims 1 -21,
wherein the triglyceride oil has a native triglyceride structure.

23. Process according to any of the claim 1-22, said process further comprising the step of adding the heat-treated triglyceride oil to a food product.

24. Use of a process according to any of claims 1-22 to treat a refined triglyceride oil comprising fatty acids having a carbon chain length of C12-C24 in an amount of at least 50% of the total triglyceride content.

25. The use according to claim 24, wherein the treated refined triglyceride oil is used in food applications.

## Patentansprüche

1. Verfahren zum Verringern der Menge von Estern von 2- und 3-MCPD in raffiniertem Triglyceridöl, wobei das Öl vor einem Eintreten in das Verfahren mit einem oder mehreren Raffinierungsschritten behandelt worden ist und
wobei das Öl Triglyceride von Fettsäuren mit einer Kohlenstoffkettenlänge von C12 - C24 in einer Menge von mindestens 50% des gesamten Triglyceridgehalts umfasst,
wobei das Verfahren die Schritte umfasst:
- das Öl mit einer Base zu mischen und
- das Öl einer Wärmebehandlung zu unterziehen, während bei verringertem Druck Dampf durch das Öl geleitet wird, wobei der Umesterungsgrad in dem Produkt aus dem Verfahren unter 60% gehalten wird.

2. Verfahren nach Anspruch 1,
wobei der Umesterungsgrad in dem Öl 50% oder weniger oder 40% oder weniger, vorzugsweise 30% oder weniger, mehr bevorzugt 20% oder weniger, am meisten bevorzugt 10% oder weniger beträgt.

3. Verfahren nach den Ansprüchen 1 und 2,
wobei die Wärmebehandlung bei einer Temperatur zwischen 120°C und 240°C, vorzugsweise zwischen 175°C und 235°C, am meisten bevorzugt zwischen 200°C und 225°C ausgeführt wird.

4. Verfahren nach einem der Ansprüche 1-3,
wobei die Wärmebehandlung eine Dauer zwischen 10 Minuten und 4 Stunden, vorzugsweise zwischen 20 Minuten und 3 Stunden, mehr bevorzugt zwischen 30 Minuten und 2 Stunden hat.

5. Verfahren nach einem der Ansprüche 1-4,
wobei der verringerte Druck zwischen 1 und 100 mbar, vorzugsweise zwischen 1,5 und 30 mbar, mehr bevorzugt zwischen 2 und 10 mbar beträgt.

6. Verfahren nach einem der Ansprüche 1-5,
wobei das Verfahren des Weiteren den Schritt umfasst, nachfolgend an die Wärmebehandlung das Öl mit neutraler Bleicherde in Kontakt zu bringen.

7. Verfahren nach Anspruch 6,
wobei die Bleicherde ausgewählt wird aus der Gruppe bestehend aus auf Mineralien basierenden Bleichtonen und Bleicherde mit einem pH zwischen 4 und 9, vorzugsweise zwischen 6 und 8 in wässriger Suspension.

8. Verfahren nach Anspruch 7,
wobei die auf Mineralien basierenden Tone aus der Gruppe bestehend aus Bentonit, Fullerde und Sepiolith ausgewählt werden.

9. Verfahren nach einem der Ansprüche 6 bis 8,
wobei die Konzentration von Glycidylestern in dem Triglyceridöl um mindestens 80%, vorzugsweise mindestens 90% verringert wird verglichen mit der Konzentration von Glycidylestern in dem Triglyceridöl nach der Wärmebehandlung, indem das Öl mit neutraler Bleicherde in Kontakt gebracht wird oder indem das Öl mit neutraler Bleicherde in Kontakt gebracht wird, gefolgt von einer Desodorierung.

10. Verfahren nach einem der Ansprüche 1-9,
wobei der eine oder die mehreren Raffinierungsschritte vor der Wärmebehandlung ausgewählt werden aus der Gruppe bestehend aus Entschleimen, Waschen, Trocknen, Neutralisieren, Bleichen, Kohlenstoffbehandlung, Filtrieren, Destillation und Desodorierung.

11. Verfahren nach einem der Ansprüche 1-10,
wobei freie Fettsäuren zu dem Öl hinzugegeben werden.

12. Verfahren nach einem der Ansprüche 1-11,
wobei freie Fettsäuren vor und/oder während einer Wärmebehandlung hinzugegeben werden.

13. Verfahren nach den Ansprüchen 11 oder 12,
wobei die freien Fettsäuren in einer Menge von 0,1 bis 3 Gew.-% der Ölmenge hinzugegeben werden.

14. Verfahren nach einem der Ansprüche 1-13,
wobei vor einer Wärmebehandlung Glycerol zu dem Öl hinzugegeben wird.

15. Verfahren nach Anspruch 14,
wobei das Glycerol in einer Menge von 0,1 bis 1 Gew.-% der Ölmenge hinzugegeben wird

16. Verfahren nach einem der Ansprüche 1-15,
wobei das Öl Triglyceride von Fettsäuren mit einer Kohlenstoffkettenlänge von C12 - C24 in einer Menge von mindestens 60% des gesamten Triglyceridgehalts, vorzugsweise mindestens 75%, mehr bevorzugt mindestens 85% des gesamten Triglyceridgehalts umfasst.

17. Verfahren nach einem der Ansprüche 1-16,
wobei das Triglyceridöl ausgehend von Palmöl, Sonnenblumenöl, Rapsöl, Sojabohnenöl, Maisöl, Kokosnussöl, Palmkernöl, Sheakernöl, strukturierten Triglyceriden, die durch positionsspezifische Lipasen hergestellt worden sind, deren Fraktionen und Kombinationen davon erhalten wird.

18. Verfahren nach einem der Ansprüche 1-17,
wobei die Base aus der Gruppe bestehend aus NaOH, KOH, anderen Hydroxiden von Alkalimetallen oder Erdalkalimetallen ausgewählt wird.

19. Verfahren nach einem der Ansprüche 1-18,
wobei die Base als eine wässrige Lösung, ein Feststoff, verseifte Fettsäuren, verseiftes Triglyceridöl oder eine jegliche Kombination bereitgestellt wird.

20. Verfahren nach einem der Ansprüche 1-19,
wobei die Basenkonzentration, die in das Öl eingemischt wird, 2 ppm - 30 ppm Hydroxidionen, vorzugsweise zwischen 3 ppm und 20 ppm Hydroxidionen, mehr bevorzugt zwischen 4 ppm und 15 ppm Hydroxidionen, am meisten bevorzugt zwischen 5 ppm und 12 ppm Hydroxidionen entspricht.

21. Verfahren nach einem der Ansprüche 1-20,
wobei die Konzentration von Estern von 2- und 3-MCPD in raffiniertem Triglyceridöl um mindestens 50%, vorzugsweise 60%, mehr bevorzugt 70%, am meisten bevorzugt mindestens 80% bezogen auf die anfängliche Konzentration verringert wird.

22. Verfahren nach einem der Ansprüche 1-21,
wobei das Triglyceridöl eine native Triglyceridstruktur aufweist.

23. Verfahren nach einem der Ansprüche 1-22, wobei das Verfahren des Weiteren den Schritt umfasst, das wärmebehandelte Triglyceridöl zu einem Nahrungsmittelerzeugnis hinzuzugeben.

24. Verwendung eines Verfahrens nach einem der Ansprüche 1-22, um ein raffiniertes Triglyceridöl, umfassend Fettsäuren mit einer Kohlenstoffkettenlänge von C12-C24 in einer Menge von mindestens 50% des gesamten Triglyceridgehalts, zu behandeln.

25. Verwendung nach Anspruch 24, wobei das behandelte raffinierte Triglyceridöl in Nahrungsmittelanwendungen verwendet wird.

## Revendications

1. Procédé de réduction de la quantité d'esters de 2- et 3-MCPD dans une huile raffinée à base de triglycérides, dans lequel ladite huile, avant d'entrer dans le procédé, a été traitée par une ou plusieurs étapes de raffinage et
dans lequel ladite huile comprend des triglycérides d'acides gras ayant une longueur de chaîne carbonée de C12 à C24 en une quantité d'au moins 50 % de la teneur totale en triglycérides,
le procédé comprenant les étapes de :
- mélange de l'huile avec une base, et
- traitement thermique de l'huile tout en faisant passer de la vapeur d'eau à travers l'huile sous pression réduite, en maintenant le degré d'interestérification dans le produit provenant du procédé en dessous de 60 %.

2. Procédé selon la revendication 1,
dans lequel le degré d'interestérification dans l'huile est de 50 % ou moins ou de 40 % ou moins, de préférence de 30 % ou moins, de manière davantage préférée de 20 % ou moins, de manière préférée entre toutes de 10 % ou moins.

3. Procédé selon les revendications 1 et 2,
dans lequel le traitement thermique est réalisé à une température comprise entre 120°C et 240°C, de préférence entre 175°C et 235°C, de manière préférée entre toutes entre 200°C et 225°C.

4. Procédé selon l'une quelconque des revendications 1 à 3,
dans lequel le traitement thermique a une durée comprise entre 10 minutes et 4 heures, de préférence entre 20 minutes et 3 heures, de manière davantage préférée entre 30 minutes et 2 heures.

5. Procédé selon l'une quelconque des revendications 1 à 4,
dans lequel la pression réduite est comprise entre 1 et 100 mbar, de préférence entre 1,5 et 30 mbar, de manière davantage préférée entre 2 et 10 mbar.

6. Procédé selon l'une quelconque des revendications 1 à 5,
dans lequel le procédé comprend en outre l'étape, après le traitement thermique, de mise en contact de l'huile avec une terre de blanchiment neutre.

7. Procédé selon la revendication 6,
dans lequel la terre de blanchiment est choisie dans le groupe constitué des argiles de blanchiment à base de minéraux et d'une terre de blanchiment ayant un pH dans une suspension aqueuse compris entre 4 et 9, de préférence entre 6 et 8.

8. Procédé selon la revendication 7,
dans lequel les argiles à base de minéraux sont choisies dans le groupe constitué de la bentonite, de la terre à foulon et de la sépiolite.

9. Procédé selon l'une quelconque des revendications 6 à 8,
dans lequel la concentration des glycidylesters dans l'huile de triglycérides est réduite d'au moins 80 %, de préférence d'au moins 90 %, par rapport à la concentration des glycidylesters dans l'huile de triglycérides après le traitement thermique, par mise en contact de l'huile avec une terre de blanchiment neutre, ou par mise en contact avec une terre de blanchiment neutre suivie d'une désodorisation.

10. Procédé selon l'une quelconque des revendications 1 à 9,
dans lequel la ou les étapes de raffinage avant le traitement thermique sont choisies dans le groupe constitué de
une démucilagination, un lavage, un séchage, une neutralisation, un blanchiment, un traitement au charbon, une filtration, une distillation et une désodorisation.

11. Procédé selon l'une quelconque des revendications 1 à 10,
dans lequel des acides gras libres sont ajoutés à l'huile.

12. Procédé selon l'une quelconque des revendications 1 à 11,
dans lequel des acides gras libres sont ajoutés à l'huile avant et/ou pendant le traitement thermique.

13. Procédé selon les revendications 11 ou 12,
dans lequel les acides gras libres sont ajoutés en une quantité de 0,1 à 3 % en poids de la quantité d'huile.

14. Procédé selon l'une quelconque des revendications 1 à 13,
dans lequel du glycérol est ajouté à l'huile avant le traitement thermique.

15. Procédé selon la revendication 14,
dans lequel le glycérol est ajouté en une quantité de 0,1 à 1 % en poids de la quantité d'huile.

16. Procédé selon l'une quelconque des revendications 1 à 15,
dans lequel l'huile comprend des triglycérides d'acides gras ayant une longueur de chaîne carbonée de C12 à C24 en une quantité d'au moins 60 % de la teneur totale en triglycérides, de préférence d'au moins 75 %, de manière davantage préférée d'au moins 85 % de la teneur totale en triglycérides.

17. Procédé selon l'une quelconque des revendications 1 à 16,
dans lequel l'huile de triglycéride est obtenue à partir d'huile de palme, d'huile de tournesol, d'huile de colza, d'huile de soja, d'huile de maïs, d'huile de coprah, d'huile de palmiste, d'huile de karité, de triglycérides structurés fabriqués par des lipases positionnelles spécifiques, leurs fractions et les combinaisons de ceux-ci.

18. Procédé selon l'une quelconque des revendications 1 à 17,
dans lequel la base est choisie dans le groupe constitué de NaOH, KOH, d'autres hydroxydes de métaux alcalins ou de métaux alcalino-terreux.

19. Procédé selon l'une quelconque des revendications 1 à 18,
dans lequel la base est fournie sous forme d'une solution aqueuse, d'un solide, d'acides gras saponifiés, d'une huile de triglycérides saponifiée ou d'une quelconque combinaison de ceux-ci.

20. Procédé selon l'une quelconque des revendications 1 à 19,
dans lequel la concentration de la base mélangée dans l'huile correspond à 2 ppm à 30 ppm d'ion hydroxyde, de préférence entre 3 ppm et 20 ppm d'ion hydroxyde, de manière davantage préférée entre 4 ppm et 15 ppm d'ion hydroxyde, de manière préférée entre toutes entre 5 ppm et 12 ppm d'ion hydroxyde.

21. Procédé selon l'une quelconque des revendications 1 à 20,
dans lequel la concentration des esters de 2- et 3-MCPD dans l'huile de triglycérides raffinée est réduite d'au moins 50 %, de préférence de 60 %, de manière davantage préférée de 70 %, de manière préférée entre toutes d'au moins 80 %, par rapport à la concentration initiale.

22. Procédé selon l'une quelconque des revendications 1 à 21,
dans lequel l'huile de triglycérides a une structure de triglycéride native.

23. Procédé selon l'une quelconque des revendications 1 à 22, ledit procédé comprenant en outre l'étape d'addition de l'huile de triglycérides traitée thermiquement à un produit alimentaire.

24. Utilisation du procédé selon l'une quelconque des revendications 1 à 22 pour traiter une huile de triglycérides raffinée comprenant des acides gras ayant une longueur de chaîne carbonée de C12 à C24 en une quantité d'au moins 50 % de la teneur totale en triglycérides.

25. Utilisation selon la revendication 24, dans laquelle l'huile de triglycérides traitée raffinée est utilisée dans des applications alimentaires.
